# EUROPEAN PATENT SPECIFICATION

(11) **EP 0 601 157 B1**
(45) Date of publication and mention of the grant of the patent: **04.02.1998**
(21) Application number: 93913042.3
(22) Date of filing: 14.06.1993
(51) Int. Cl.: F24J 2/24, E04D 13/18

(54) **SOLAR THERMAL CELL**
SONNENWÄRMEZELLE
PANNEAU THERMIQUE SOLAIRE

(30) Priority: 16.06.1992 FI 922793; 03.07.1992 FI 920449 U; 11.01.1993 FI 930005 U
(43) Date of publication of application: 15.06.1994
(73) Proprietor: Reiala, Mauno Sakari, 05880 Hyvinkää (FI)
(72) Inventor: Reiala, Mauno Sakari, 05880 Hyvinkää (FI)
(86) International application number: PCT/FI93/00257
(87) International publication number: WO 93/25855

(56) References cited:
- EP-A- 0 346 820
- WO-A-91/07558
- DE-A- 2 600 598
- GB-A- 2 175 995
- A.E. Dixon and J.D. Leslie; Solar Energie Conversion; Selected Lectures from the 5th Course on Solar Energy Conversion; August 6-19, 1978; Pergamon Press; Toronto; Pages 383 to 386

## Description

The invention relates to a solar thermal cell.

The amount of energy received by the solar thermal cell is nearly doubled as the solar radiation is not reflected back from the collector and as the radiation energy is transmitted directly to a liquid jacket the size of the entire surface of the collector.

In experiments executed with the obstacle to solar radiation consisting of a dark mineral wool board, the temperature in the thin liquid jacket located between membranes on top of the mineral wool board unexpectedly rose to a level approx. 25°C higher than in the liquid piping of a known art metal-surfaced energy collector.

A solar thermal cell the size of the entire pane of the roof, for example, should function advantageously also as a roof. When placed on top of greenhouse, for instance, a solar thermal cell should provide protection against excessive insolation and UV radiation and in winter it should act as an insulation layer over the greenhouse.

Patent publication DE 2724035 presents a tiered solar radiation collector in which the heat energy is transferred to a metal piping underlying a black metal sheet while overlying the collector there are light admitting plastic membranes and a sheet of glass. Underneath the collector there is known art heat insulation.

Patent publication FI 63117 describes a lens solar cell whose surface consists of liquid lenses placed side-by-side and thus forming a heat-collecting liquid jacket.

The solar energy collector described in patent publication DE 3541713 consists of a heat-collecting sheath formed over a black-surfaced aluminium sheet by gluing a glass plate over it. A horizontal cavity level is thus formed between the aluminium and glass for a fluid substance. Heat insulation is provided at the rear of the underlying sheet.

In the solar collector-accumulator in accordance with patent publication DE 4103344 there are two plastic water bags one on top of the other. Between these bags there is a heat exchanger; e.g consisting of flat metal pipes. The bag on top admits light while the bag below it is black or its lower surface is black. When filled with water, the bags are approximately 2 - 5 cm in thickness. Underneath the bags there is known art heat insulation.

The roof covering making use of energy in accordance with patent publication DE 3529970 is provided with intermediate spaces for liquid to flow in. The structure is sealed and it withstands wear such as walking of top of it. It is formed of a metal membrane or a multiple membrane. A surface membrane is placed over the roof covering.

The solar energy collector in accordance with DE patent publication 3537223 has a frame made of material such as polystyrene or metal with an overlying absorption membrane of material such as black copper or aluminium membrane and a specially constructed tetrafluorethylene plastic membrane placed over the collector. The membrane can be welded to seal it and overlying there may be a grid formed of brass pipes to prevent the wind from hindering the functioning of the membrane. The polystyrene frame may form the underlying heat insulation.

Uppermost in the roof solar collector in accordance with patent publication NO 170698 is a light-admitting sheet of polycarbonate. Underneath the overlying sheet there is a sheet of aluminium painted black to act as the absorbing sheet, the said aluminium sheet being known to absorb and bind to itself radiation energy of the sun. Via its under surface and the mediation of a heat exchanger sheet, the absorbing sheet is in contact with a mediating piece, whose upper surface is provided with channels for the down-flowing liquid. The mediating piece located underneath the heat exchanger sheet can be of a heat-insulating type.

The aforementioned solar radiation energy absorbing and binding metal-surfaced solar collectors and liquid-jacketed lens solar cells and liquid-jacket solar collectors and liquid-jacket accumulators and covers reflect back a relatively large proportion of the solar radiation and they are structurally relatively complex and expensive.

Approximately 65% of the solar radiation energy was reflected back and transferred from known art metal-surfaced solar energy collectors. The price per square metre of metal-surfaced collectors is relatively high and the service life of the metal in the collector's variable conditions is relatively short when compared to boards of mineral wool, for instance. A porous, black mineral wool board does not bind to itself nor conduct solar radiation energy as do metal and plastic absorbers, but solar radiation is not reflected back from the black, porous wool. A mineral wool board type for flat roof construction and capable of withstanding the weight of snow is known.

All solar thermal cell require heat insulation underneath them and a light-admitting insulation layer above.

The solar thermal cell in accordance with patent application FI 922793 has a light-admitting cover and a liquid jacket above a dark surface and a heat insulation layer underneath, and underneath the liquid jacket there is a layer stopping solar radiation in the form of a dark-surfaced board of mineral wool or equivalent, and the liquid jacket can be formed between membranes.

The liquid-jacket solar cell roof in accordance with FI utility patent NRO 350 embodies a liquid jacket between membranes and roof material consisting of corrugated fibreglass sheets or equivalent, and between the membranes there are ridges forming intermediate spaces for the liquid.

The liquid-jacket solar cell roof in accordance with FI utility patent NRO 678 has at least two tiers of intermediate spaces between membranes and the liquid jacket is located in the lower intermediate space tier overlying the mineral wool board and the uppermost tier containing air forms a surface heat insulation roof cover.

In accordance with a solar panel as per patent publication DE 2600598 there are passages with ridges for liquid between an opaque upper wall and a black, absorbing lower wall. Underneath and aroud the collector there is known art heat insulation.

In accordance with a device as per patent publication GB 2175995 there are, inter alia, parallel passages formed of plastic for liquid to flow in. Underneath the liquid space there is heat insulation and a plastic reflecting heat.

In accordance with a device as per patent publication WO 9107558 there is, underneath the cover, a solar energy collector in which, overlying the heat insulation, there is an absorbing metal plate and longitudinally placed pipes for the liquid.

In accordance with a solar panel as per patent publication EP 0346820 there are parallel passages formed of metal for liquid to flow in and underneath them there is a membrane and material that reflects heat.

Known art membranes, such as membranes made of polyester plastic, modify the wave length of solar radiation and thereby prevent the radiation from returning through the membrane. The polyester membrane is made of polyethylene-terephtalate membrane. A corresponding membrane is made of teflon FEP membrane. Known are tetrafluorethylene plastic solar membranes and polycarbonate solar membranes, and triple-layered sheets made of polycarbonate plastic by means of extrusion technique in which sheets there are rectangular intermediate spaces in several layers. Known a glass plate.

The purpose of the invention is to bring about a solar thermal cell in which the solar radiation energy is collected either into a liquid jacket covering the entire surface and relatively little of the solar radiation is reflected back, and the collector is advantageously the size of the entire plane of a roof and forming a roof capable of withstanding the weight of the snow. These purposes can be realised in accordance with the characteristics of the invention as defined in the patent claim 1.

In the following, the invention is described in more detail by referring to the accompanying drawings, which illustrate applications of a solar energy collector in accordance with the invention:

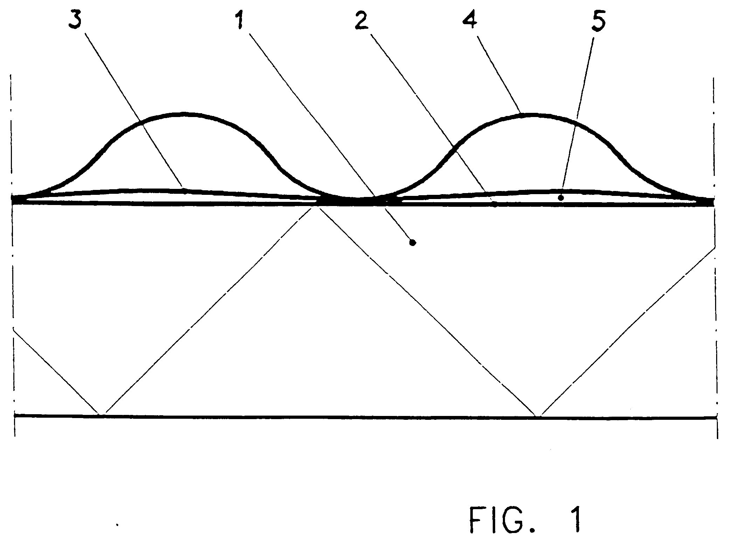

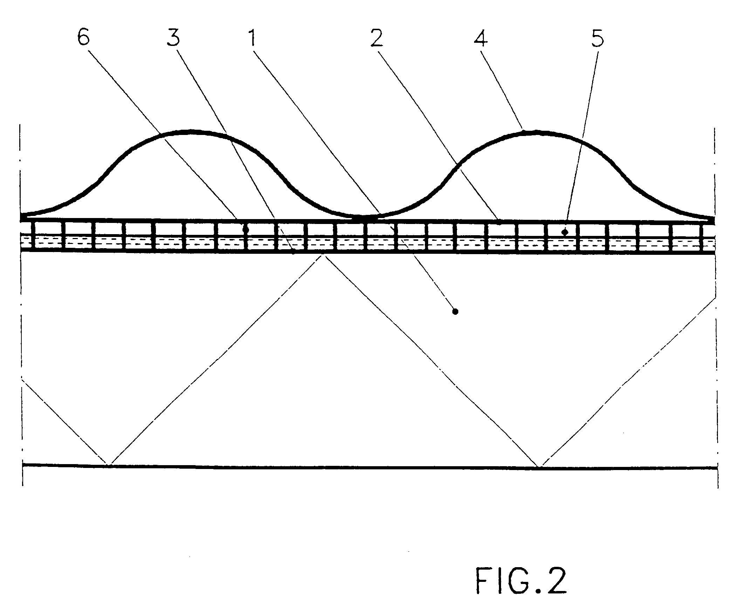

FIG. 1 and FIG. 2 shows a solar thermal cell with an overlying sheet of corrugated fibreglass.

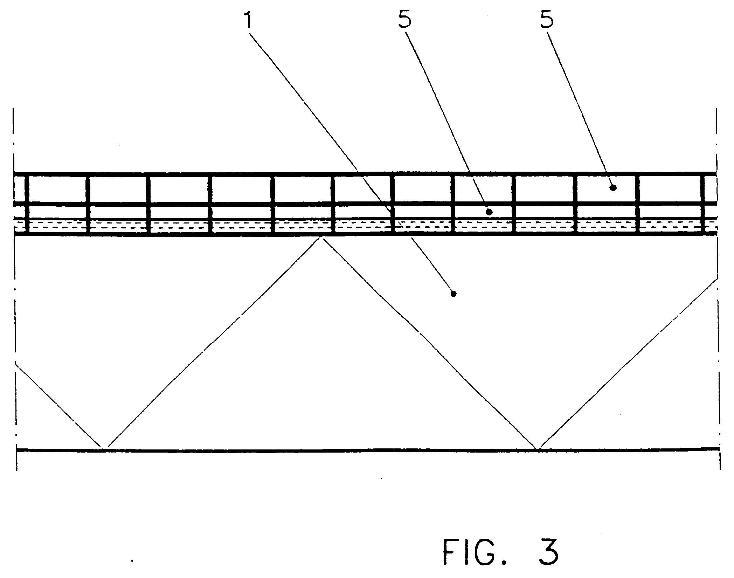

FIG. 3 shows a solar thermal cell with several tiers of intermediate spaces.

The solar thermal cell has a light-admitting cover and a jacket of liquid overlying a dark surface and a heat insulation layer underneath. Underneath the intermediate space (5) containing the liquid there is a layer stopping solar radiation consisting of a dark-surfaced mineral wool board (1) or equivalent such as a black glasswool surface.
The intermediate space for the liquid may be formed by light-admitting membranes (2 and 3) or an equivalent such as a glass plates.

Overlying the membranes (2 and 3) and compacting there may be a cover of corrugated fibre glass (4) or equivalent.
Between the membranes (2 and 3) or their equivalent there may be ridges (6) or equivalent, these forming intermediate spaces (5) between the membranes (2 and 3), such as those rectangular in cross section, such as the membranes (2 and 3) and the ridges (6) are of the same material. The intermediate spaces (5) may be arranged in two or more tiers and the tier overlying the mineral wool board (1) may contain a liquid and uppermost there may be air forming the surface heat insulation cover.
The liquid may be coloured black such as dark water.
The edges of the panels of cells may have known art well sealed tongue grooves enabling fixing to form a roof.

## Claims

1. Solar thermal cell comprising
a light-admitting cover (4) and a light-admitting jacket overlying a dark surface, the jacket provides an intermediate space (5) for a liquid, and the back of the jacket is provided with insulation,
characterized in that
underneath the light-admitting jacket there is a dark-surfaced mineral wool board (1), such as a black glasswool surface, stopping solar radiation.

2. Solar thermal cell as claimed in claim 1, **characterized in that** the intermediate space (5) for the liquid is formed by light-admitting membranes (2;3), such as glass plates.

3. Solar thermal cell as claimed in claim 2, **characterized in that** the light-admitting cover (4) is corrugated fibreglass overlying the membranes (2;3).

4. Solar thermal cell according to the claims 2 and 3,
**characterized in that** between the membranes (2;3) intermediate ridges (6) are provided, which form intermediate spaces (5) for the liquid between the mebranes (2;3).

5. Solar thermal cell according to claim 4, **characterized in that** the membranes (2;3) and the ridges (6) are of the same material.

## Patentansprüche

1. Solarwärmezelle bestehend aus
einem lichtdurchlässigen Deckel (4) und einem lichtdurchlässigen Mantel oberhalb einer dunklen Fläche; der Mantel verschafft einen Zwischenraum (5) für eine Flüssigkeit, und die Rückseite des Mantels ist mit Isolierung versehen,
dadurch gekennzeichnet, daß
sich unterhalb des lichtdurchlässigen Mantels eine dunkelflächige Mineralwollscheibe (1) befindet, wie etwa eine schwarze Glaswollfläche, die die Sonnenstrahlung stoppt.

2. Solarwärmezelle nach Anspruch 1, dadurch gekennzeichnet, daß der Zwischenraum (5) für die Flüssigkeit durch lichtdurchlässige Membranen (2; 3) wie etwa durch Glasscheiben, gebildet ist.

3. Solarwärmezelle nach Anspruch 2, dadurch gekennzeichnet, daß der lichtdurchlässige Deckel (4) aus einer Fiberglaswellplatte besteht, die oberhalb der Membranen (2; 3) angeordnet ist.

4. Solarwärmezelle nach Anspruch 2 und 3, dadurch gekennzeichnet, daß zwischen den Membranen (2; 3) intermediäre Stege (6) angeordnet sind, die Zwischenräume (5) für die Flüssigkeit zwischen den Membranen (2; 3) bilden.

5. Solarwärmezelle nach Anspruch 4, dadurch gekennzeichnet, daß die Membranen (2; 3) und die Stege (6) aus demselben Material sind.

## Revendications

1. Panneau Thermique Solaire comprend
un couvercle admettant la lumière (4) et une chemise admettant la lumière superposant une surface noire, cette chemise est munie d'un espace intermédiaire (5) pour le liquide et le dos de la chemise est pourvu d'une surface isolatrice,
caractérisé par le fait que en dessous de la chemise recevant la lumière se trouve un panneau de laine minérale (1), telle une surface de laine de verre noire, arrêtant la radiation solaire.

2. Panneau Thermique Solaire répondant aux revendications 1,
caractérisé par le fait que l'espace intermédiaire (5) pour le liquide est composé de membranes admettant la lumière (2;3) telles des plaques de verre.

3. Panneau Thermique Solaire répondant aux revendications 2,
caractérisé par le fait que le couvercle admettant la lumière (4) est composé d'une surface de fibre de verre ondulée superposant les membranes (2;3).

4. Panneau Thermique Solaire répondant aux revendications 2 et 3,
caractérisé par le fait que entre les membranes (2;3) des paroies (6) sont installées, elles forment des espaces intermédiaires (5) pour le liquide entre les membranes (2;3).

5. Panneau Thermique Solaire répondant aux revendications 4,
caractérisé par le fait que les membranes (2;3) et les paroies (6) sont de même matériau.
